# EUROPEAN PATENT SPECIFICATION

(11) **EP 0 279 553 B1**
(45) Date of publication and mention of the grant of the patent: **04.05.1994**
(21) Application number: 88300858.3
(22) Date of filing: 02.02.1988
(51) Int. Cl.: G06F 3/023, B41J 5/10, H01H 13/70

(54) **Alpha-numeric keyboard**
Alpha-numerische Tastatur
Clavier alpha-numérique

(30) Priority: 18.02.1987 US 15886
(43) Date of publication of application: 24.08.1988
(73) Proprietor: Retter, Dale J., Scottsdale Arizona 85258 (US)
(72) Inventor: Retter, Dale J., Scottsdale Arizona 85258 (US)
(74) Representative: Smith, Norman Ian

(56) References cited:
- EP-A- 0 050 565
- US-A- 4 265 557
- US-A- 4 378 553
- US-A- 4 584 443

## Description

### Background

The transmission of alpha-numeric information from one person to another currently essentially is carried out by means of four different data entry techniques. These include sticks (chisel on stone, pencils, pens, markers, and the like), keyboards (typically used with typewriters, computers, and word processors), spatial devices (computer "mice", track balls, joy sticks, and the like used with computers); and voice (direct human communication and voice responsive computer systems). At the present state of technology, word processors and computers primarily rely upon data entry keyboards and the various spatial devices for inputting information into the computer, electronic typewriter, or word processor for subsequent display and/or printing. Of these techniques, keyboards are the most widely used today and many computers use a combination of keyboards and spatial devices (such as the movable "mice" which have become highly popular since 1980 for example on the Apple McIntosh computer).

The now standard keyboard character assignment used in conjunction with typewriters and computers has what is know as the "QWERTY" key arrangement. This designation is named after the top row of letters in the four row keyboard. The "QWERTY" arrangement was invented and patented over 100 years ago and resulted from some unique characteristics of the all mechanical typewriters which existed at the time of the invention. One problem with early mechanical typewriters was that the entire force for providing the mechanical energy used to operate most of the typing function was provided by the force with which the key was struck. In addition to moving the typebar, this force also released the carriage and moved the ribbon forward with no other energy source.

Early keyboards utilized a simple alphabetic layout, but it was quickly discovered that the typebars of the early, crude, mechanical typewriters frequently jammed once a typist learned how to use the keyboard. After substantial experimentation, the "QWERTY" keyboard was developed to place the most commonly used letters in English at the opposite sides of the type basket. The keyboard itself was laid out to provide direct mechanical connections to the various letters. Consequently, many of the commonly used letters were placed away from the "home" (center) row where the fingers normally rested. In addition, the "QWERTY" keyboard was designed with another slow-down technique by causing common letter pairs to be struck by the same finger on the same hand. This is the slowest motion for successive letters which could be developed. The "QWERTY" keyboard also introduced two function keys the "CAP LOCK" and "SHIFT" keys which allowed upper and lower case letter to be activated by the same keys and allowed the upper row of keys (the numbers and punctuations) to share the same keys. This was in contrast to typewriters less advanced than "QWERTY" which had eight rows of keys instead of the basic four rows for "QWERTY". The early widespread popularity of the "QWERTY" mechanical typewriter resulted in a nearly universal adoption of the "QWERTY" keyboard layout.

The "QWERTY" keyboard continued to be used, because of widespread mastery by secretaries and data input operators, even after the reasons for its original development no longer were applicable. Electric typewriters eased the finger burden by allowing the keystroke to mechanically access an electric motor which then provided the energy to complete the mechanical process of printing and operating the other mechanism of the typewriter. Electric typewriters in turn have been replaced by electronic typewriters, word processors, and computers which completely eliminate the necessity for the inefficient "QWERTY" keyboard layout. This layout, however, has continued to dominate the market today, long after its need has disappeared. Computer keyboard buffers, which separate too quickly struck keys, eliminate all of the problems which the "QWERTY" keyboard originally was designed to overcome.

Efforts have been made to modify the layout of multi-key keyboards to improve efficiency. One such keyboard is disclosed in the keyboard to Dvorak #2,040,248. This keyboard was designed after an analysis of errors made with the standard "QWERTY" layout. The Dvorak layout concentrates the vowels and most frequently used letters on the "home" row so that there is much less moving around from row to row of the fingers of the typist. It has been found that this row to row movement in "QWERTY" keyboards and other multiple row keyboards results in most of the errors made by typist. In addition, the Dvorak keyboard changes the balance between the left and right hand. In a "QWERTY" keyboard the usage is 57% for the left hand, whereas in Dvorak the change is to 56% for the right hand better suited for right handed typist. Even though the Dvorak keyboard, however, has been known for over 50 years, it has not made many in-roads into the standard "QWERTY" keyboard world. Even with its greater efficiency, however, Dvorak keyboards still are subject to the requirement of movement over four rows of keys (when a number row is provided). This is inefficient and inherently presents a capacity for introduction of errors when the fingers move with little or no tactile feedback from one row to another away from the "home" row.

Other efforts at providing a more natural arrangement of keys to fit the natural shape of the hand and to utilize the significantly greater dexterity of the thumbs is typified in the keyboard arrangement of Malt #4,244,659. With ordinary keyboards such as the "QWERTY" and Dvorak keyboards, the eight fingers are used to produce all of the key strokes and the thumbs (primarily the right thumb) are used solely to operate the space bar. The thumb of the human hand, however, has more capability of finger movement than the index finger and is the most important and most-used digit of the hand. Malt recognized this and assigned each thumb six different keys or functions. In addition, the keys are said out in a curved arrangement corresponding to the different lengths of the fingers on each hand. The keys for each hand also are separated into two grouops with the thumb positions adjacent one another. Even though it appears to be a more efficient layout than a standard "QWERTY" keyboard, the Malt keyboard arrangement has not been widely adopted. Once again, the fingers (and the thumbs) must move over multiple rows of keys; so that row to row and key to key movement errors still may be introduced with the Malt keyboard.

Other types of non-standard keyboard character assignments have been developed never the years in addition to the Dvorak and Malt keyboards discussed above, but in view of the minimal advantages obtained from such assignments over the standard "QWERTY" arrangement, no overriding reason has been presented to the industry to modify the well-established and well-known "QWERTY" keyboard arrangement.

An entirely different approach has been undertaken by others in the past to provide multiple switches or key assignments at eachy of several different fixed finger locations. Such an approach is disclosed in the patent to Hesh #2,536,228. This patent is for electrically operated typewriter in which the keyboard location of the typewriter has been modified to provide two groups of five semi-circular keys. These keys underlie the thumb and forefingers, respectively, of the left and right hands. Each key may be operated by pivoting it forward, backward, left, right or by pushing it straight down to obtain five different outputs from each key position. These outputs then are used to operate the otherwise conventional mechanism of the electric typewriter. Similar arrangements are shown in the patents to Samuel #3,633,724 (for a typewriter) and Wuenn #3,965,315 (for a calculator). The Samuel typewriter employs only eight pivoted keys and utilizes the conventional space bar, return, and shift keys normally associated with standard typewriter keyboards.

The systems of Hesh, Samuel, and Wuenn, since they are placed on flat keyboard-like surfaces, do not provide support for the hands and fingers of the operator even though the layout of Hesh does place the keys in a semi-circular arrangement conforming to the relaxed position of the fingertips and thumb of each hand. It is very difficult for a keyboard operator to maintain the hands and fingers in a closely confined space unless a supporting and stabilizing structure is provided.

A variation of the multiple switch location for each finger is disclosed in the keyboard of the Runge #4,265,557. The system of this patent provides clusters of keys operated by each finger. The keys of the cluster are closely associated around the finger in its "home" row position. One key rests above the operator's finger and is operated by raising the finger. There also are keys behind and in front of the conventional "home" row key, so that each finger is capable of operating four different keys or switches from the "home" row position. The Runge device "locks" the fingers into narrowly defined locations without providing physical support or tactile feedback for the hands and arms to maintain the precise locations required. As a practical matter, this makes maintaining the fingers and hands in the precise location extremely difficult and fatiguing for more than brief time periods. Runge does not take advantage of the capabilities of the thumb, however, which simply is left to operate a conventional space bar. The Runge device is a relatively complex set of mechanical lever arms subject to misadjustment and wear.

An even more innovative approach is disclosed to the patent to Seivel #3,022,878. The "communication device" of this patent is an enclosure into which the hand is inserted. The four fingers and thumb are placed into switch positions where each finger and the thumb are capable of operating two different sets of switches (one set when the fingers are drawn in toward the palm of the hand and another set when the fingers are moved outwardly from the palm of the hand). Different alpha-numeric characters and other function characters then are provided by encoding different combinations of the operation of these various switches. A complex set of multiple finger operations is necessary to produce the different characters and commands from the device. One advantage of the Seivel device, however, is that the hand is not constrained to rest on a standard keyboard attached to a machine such as a typewriter, since the device of Seivel may be moved around by the operator during use.

A conceptual illustration of a semi-captive keyboard employing multiple key operation from each of the fixed finger positions is shown in the "Xerox Disclosure Journal", Volumes 1, No. 2, February 1986 (Page 85). No details of the keyboard are shown, but it essentially comprises a generally flat plate on which the hand is placed plam down with the fingers and thumb extended. The fingers and thumb appear to enter into openings in a vertical, raised portion adjacent the flat palm receiving portion. In these openings, clusters of keys are placed around the fingers for operation by each finger. This disclosure lacks sufficient details for implementation into an operative system.

It is desirable to provide an improved data input device in the form of a finger actuated keyboard which overcomes the disadvantages of the prior art and which is more natural to use than standard or modified keyboards of the prior art, which is particularly suitable for utilisation as a computer input keyboard, and which is easy to use and quick to learn.

It is an object of this invention to provide an improved keyboard.

According to one aspect of the present invention there provided a keyboard for controlling data input of a full set of desired characters comprising:
a housing, key switches arranged on the housing in an overall pattern corresponding substantially to the non-chording QWERTY style key arrangement wherein each data input character is produced by actuation of a single discrete key switch, and the key switches also being arranged in additional predetermined patterns at each of the thumb and finger positions for separate actuation by the thumb and finger of an operator's hand, the key switches at each of the finger positions being arranged in a first predetermined pattern at each finger position and the key switches at the thumb position being arranged in a second predetermined pattern, characterised in that the housing has a raised central portion thereon which is devoid of keys and adapted to generally underlie and fit against the palm of a hand to support the hand from beneath the palm only through the palm resting on the raised central portion, and has thumb and finger positions adjacent the raised central portion arranged in a pattern generally corresponding to the relaxed position of a hand with the fingers extending downwardly from a generally horizontal plane when the palm of the hand is placed on the raised central portion with the palm of the hand remaining in one basic position resting on the raised portion throughout operation of the keyboard; at least each of said finger positions comprising individual, substantially upwardly open-top fingertip wells in the housing to freely receive the fingertips of an operator, each of the wells having substantially vertical walls and a bottom, with a first key switch located in the bottom of each of the wells, and at least one other key switch located on a vertical wall of each of said wells, such that each key switch in each well is actuated by movement of the fingertips alone without requiring movement of the hand relative to the raised central portion, each key switch being actuated by a distinct and different portion of the fingertip in each such well to provide a different tactile feedback to the operator for each different key switch contacted by the fingertips in each well, sufficient key switches being provided in the wells so that the full set of desired characters and functions are accessible without requiring movement of the hand from the one basic position; the thumb position comprising a thumb cavity having bottom and upright sides located, respectively, adjacent the end and left and right sides of a thumb placed in the thumb cavity, with the key switches at the thumb position comprising switches arranged in the bottom and on the upright sides of the thumb cavity in the second predetermined pattern, such that upon actuation, each such switch touches a distinct and different portion of the thumb to provide a different tactile feedback to the operator for each different key switch contacted by the thumb; and the switches are coupled with a processing device.

According to another aspect of the present invention there is provided an improved keyboard for operating typewriters, computers and the like to control the data input thereto characterized by: physically separate right and left mechanically independent keyboard housings each of which has an overall external configuration substantially the size of a human hand and a raised central portion devoid of keys on each to generally underlie and fit against and support the palm of a hand resting on the raised central portion, and thumb and finger positions are located adjacent the raised central portions with such positions generally corresponding to the relaxed positions of the thumb and fingers of the respective hands of an operator placed on the raised central portions of the right and left keyboard housings with the palms of each of the hands remaining in one basic position resting on the central portions without movement from such one basic position throughout the operation of the keyboard; a plurality of switches arranged in an overall pattern corresponding substantially to the non-chording QWERTY key arrangement where alpha-numeric characters each are produced by activation of a single discrete switch and also arranged in additional predetermined patterns at each of the thumb and finger positions of said right and left keyboard housings for separate actuation by the respective thumb and fingers of a hand placed on each of said right and left keyboard housings at such positions with the palms of the hands resting on the raised central portions, the switches at the finger positions arranged in a first predetermined pattern and the switches at the thumb positions arranged in a second predetermined pattern, at least each of said finger positions comprising individual, substantially vertical, open-top fingertip wells for freely receiving the ends of the fingers of an operator and having substantially vertical walls and a bottom, with a first switch located in the bottom of each of the wells and at least one other switch located on a vertical wall of each of the wells, such that each switch in each well is operated by a distinct and different portion of the fingertip in each such well to provide a different tactile feedback to the operator for each different switch contacted by the fingertips in each well; and the thumb position comprising a thumb cavity having bottom and upright sides located, respectively, adjacent the end and left and right sides of a thumb placed in the thumb cavity, with the key switches at the thumb position comprising switches arranged in the bottom and on the upright sides of said thumb cavity in the second predetermined pattern, such that upon actuation, each such switch touches a distinct and different portion of the thumb to provide a different tactile feedback to the operator for each different switch contacted by the thumb.

The invention will be described now by way of example only with particular reference to the accompanying drawings. In the drawings:
Figures 1A and 1B illustrate a feature of a preferred embodiment of the invention;
Figures 2A and 2B illustrate another feature of a preferred embodiment of the invention;
Figures 3A and 3B illustrate a further feature of a preferred embodiment of the invention;
Figure 4 is a perspective view of a preferred embodiment of the invention;
Figure 5 is a top view of a portion of the embodiment shown in Figure 4; and
Figures 6, 7, and 8 show enlarged details of portions of the embodiment shown in Figures 4 and 5.

### Detailed Description

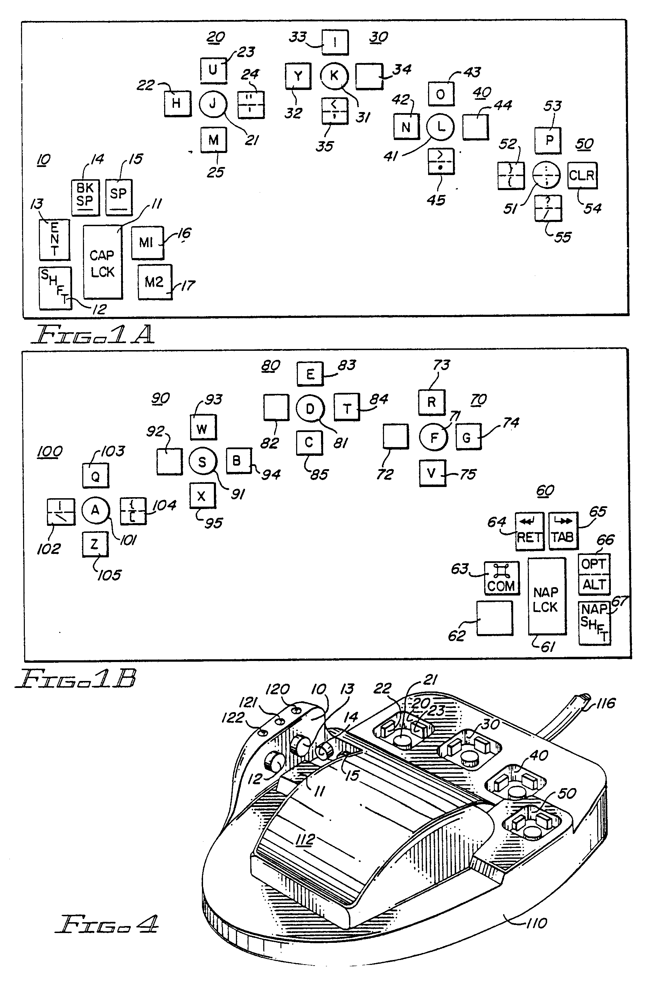

Reference now should be made to the drawings in which the same reference numbers are used throughout the different figures to designate the same or similar components. Attention first should be directed to Figures 1, 2, and 3 (divided into A and B sections, for the right and left hands respectively) which illustrate the key switch assignments for a preferred embodiment of the invention. Reference first should be made to Figures 1A and 1B which illustrate key assignments for normal operation of the keyboard in its alphabetical mode of operation.

The keyboard layout, as illustrated in Figures 1A and 1B is in two separate parts, representing the right hand (Figure 1A) and the left hand (Figure 1B), respectively. The different keys to be operated by each hand are arranged in a cluster or patterns generally conforming to the fingertip and thumb position of a relaxed hand placed in the palm-downward position. The patterns for each of the hands are illustrated in Figures 1A and 1B. For the right hand, the thumb position 10 is illustrated along with four finger positions 20, 30, 40, and 50, for the corresponding fingers of the right hand.

Each of these different key positions comprises a cluster of key switches to which are assigned different letters or symbols associated with that position. For example, the right thumb position 10 has a CAP LOCK key 11 located in an area underlying the thumb. To the left of key 11 are two other keys 12 and 13 corresponding to "SHIFT" and to "ENTER" for computers. Similarly above the CAP LOCK Key 11, as illustrated in figure 1A are a BACKSPACE key 14 and a SPACE key 15. To the right of the key 11 are two operational keys 16 and 17 designated "M1" and "M2" respectively. Similarly, as shown in Figure 1B, the left hand thumb position 60 has a "NUMBER AND PUNCTUATION" (NAP LOCK) key 61. To the left of this key 61 are a pair of keys 62 and 63, the key 62 is undesignated and the key 63 is designated "COM" for "COMMAND". Above the key 61 are a RETURN key 64 and a TAB key 65. To the right of key 61 for the left hand thumb position is a key designated "OPT/ALT" 66 and a NAP SHIFT key 67.

For each of the fingers there is a cluster of five keys constituting a central or base key 21, 31, 41, and 51 for the right hand and 71, 81, 91, and 101 for the left hand. These keys, as marked in figures 1A and 1B underlie the fingers and constitute the same key designations which exist for the "home" row of a "QWERTY" standard keyboard, namely A, S, C, F, J, K, L, and :, ;. /. As illustrated in figures 1A and 1B, four other keys exist above, below, to the left and to the right of each of these "home" or base key positions. These other keys carry designations which once again are comparable to the standard "QWERTY" keyboard for movement of the corresponding finger to a different row or to an adjacent key position (as the case may be) for such a standard keyboard. In the keyboard illustrated in figures 1A and 1B, however, the thumb and fingers never leave the "home" position, but merely make relatively small movements in the corresponding direction of the keys surrounding each base or home key to effect operation of the four surrounding key switches in the operation of the keyboard of the invention.

In the normal alphabetic mode of operation of the keyboard illustrated, the operation of the various keys provide the output designated in Figures 1A and 1B. Out of the natural alphabet of 26 letters, all but four of these letters are exactly where a "QWERTY" typist would expect to find them. Even these four keys, however, are still operated by the same hand and by a finger close to the finger used by a "QWERTY" typist. In addition, the most common punctuation keys (comma, period mark, and semi-colon) are all where a "QWERTY" trained typist would expect to find them. As a consequence, a person who is skilled in typing on a conventional "QWERTY" keyboard readily adjusts to the keyboard illustrated.

It should be noted that in contrast to standard keyboards which essentially do not utilize the thumb at all (except to operate a space bar) the keyboard illustrated in Figures 1, 2, and 3 fully utilizes the left and right thumbs. The thumbs are the most fully articulated digits on the human hand. Consequently, the keyboard of this invention uses each thumb to control up to seven different keys, as is readily apparent from an examination of Figures 1 through 3. As a result, the thumbs together control up to 14 separate functions. This significantly expands the potential capabilities of the keyboard while limiting each of the fingers to five basic movements, namely down, away from the body, toward the body, left, and right.

The layout of the alphabet keys illustrated in Figures 1A through 1B along with the most widely used punctuation, closely follows the "QWERTY" standard keyboard so far as the actual finger motion is required. The finger motion, however, is reduced to a matter of millimeters instead of the significantly long reaches necessary for a standard "QWERTY" keyboard. This eliminates the difficult and disorienting "floating" which exists for most operators of "QWERTY" keyboards (that is moving the fingers off the "home" keys and then finding and pressing the proper key). All of the function keys (space, shift, enter, command, tab, return, et cetera) are controlled exclusively by the two thumbs, and these function keys never change throughout the operation of the keyboard in its various modes of operation. In addition, as becomes apparent from an examination of the key designation layouts of Figures 1 through 3, intuitive logic and parallel functioning of the right and left hands makes learning the keyboard layout of this new keyboard simpler than learning a conventional "QWERTY" keyboard.

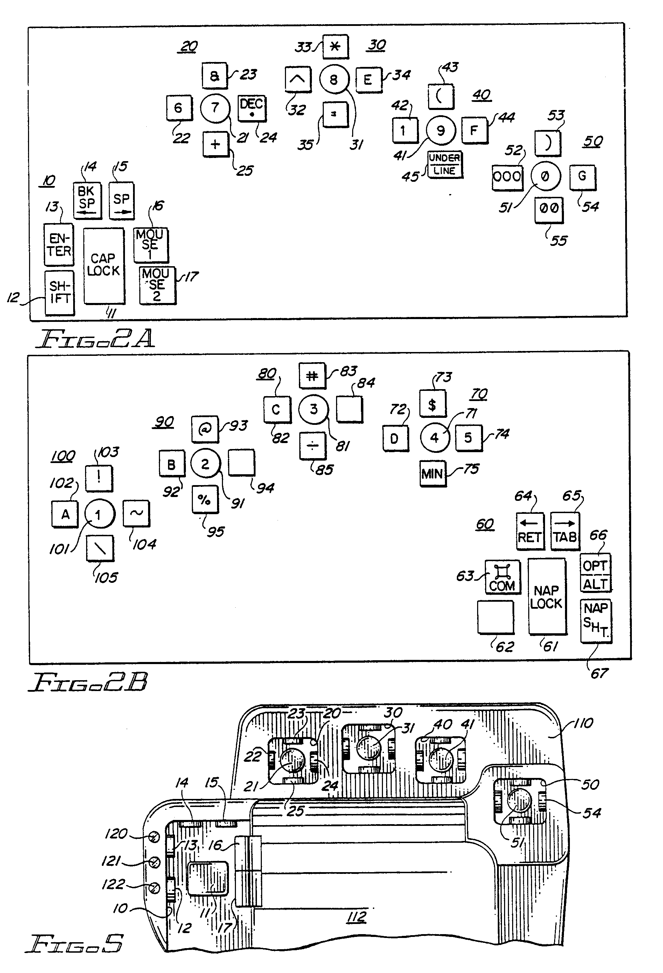

Reference now should be made to Figures 2A and 2B which illustrate, respectively, the right hand and left hand designations for the NAP mode (Numerical And Punctuation) mode of operation. This is to be contrasted with the normal mode discussed above in conjunction with Figures 1A and 1B. The same key reference numbers are used in Figures 2A and 2B, but the symbols which correspond to operation of the keys when the NAP shift key 67 or the NAP lock key 61 is operated are shown for the different keys. This NAP mode is a new mode of operation. The use of the NAP mode allows every key to remain a "home" key (as contrasted with a "QWERTY" keyboard). This reduces the number of key strokes required for common financial mathematical, or spreadsheet formulas and the like; because the punctuation frequently used with numbers (such as plus, minus, slash, asterisk, equals, et cetera) and the common unit indicators ($, %, and #) all are simultaneously available without mode change. This is readily apparent by the designations marked on the keys at the different key positions in Figures 2A and 2B.

By the use of the NAP mode, the keyboard may be operated as a numeric keypad without removing the hands from the "home" positions. Once again, this is in strong contrast to a standard "QWERTY" keyboard or to a combination "QWERTY/Calculator" type keyboard used with many computers which includes a separate numerical keypad off to the right of the normal alphabetical typing position. Since the hands remain in the "home" positions, the conventional keyboard problems of having to do a long, difficult float to the upper-most row of keys on a conventional keyboard, or to completely transfer the hands from the regular keypad to a numeric or special keypad are eliminated.

In addition, in the NAP mode illustrated in Figures 2A and 2B, having "A, B, C, D, E, F, and G" as available keys within this mode allows a full hexidecimal data entry all without requiring a mode change or removal of the hands from the "home" positions. These hexidecimal designations are provided in both the left and right hand positions, by a leftward movement of the corresponding figures of the left hand and by a rightward movement of the corresponding fingers of the right hand (mirror image movements). In addition, in the NAP mode of Figures 2A and 2B, the particular assignment of keys allows the numbers to serve as the under-finger or beneath-finger of the "home" keys; and the punctuation and special characters (available on a standard keyboard only by a combination of "shift" plus a numbered key) are accessed by the key above (that is the key actuated by extending the finger forward away from the body) the under or beneath-finger "home" key. For example, the asterisk (*) character is located in the NAP mode on the key above the "home" key of the right middle finger that, in the NAP mode, is the numeric character "8" and the "$" is located on the key above the left index finger home key (the number "4" key in the NAP mode). This all is accomplished in a fashion which is intuitively transferable from the corresponding locations learned by a conventional "QWERTY" touch typist.

Because of the significant versatility which exists in the keyboard arrangement, another totally different new mode of operation is available which is particularly suited for operating assigned function keys for various computer programs. This is accomplished by a combination or simultaneous operation of the "CAP" and "NAP" mode of operation. As noted in all of Figures 1A, 2A, and 3A, capital letters are operated by either operating the SHIFT key 12 or the CAP LOCK key 11 in a manner similar to the operation of the NAP SHIFT key 67 and NAP LOCK key 61 described previously. By selecting these two modes simultaneously, forty additional key assignments are available for utilization of the keyboard. These assignments have been designed by the "home" key positions as functions "F1" through "F8" respectively. In addition, for the positions adjacent the index finger of the right hand, up, down, left, and right cursor keys are distributed in the logical up, down, left, and right positions 23, 25, 22, and 24, respectively. This is an intuitively obvious function assignment of moving the cursors in the direction they are pushed by the finger operating in this position.

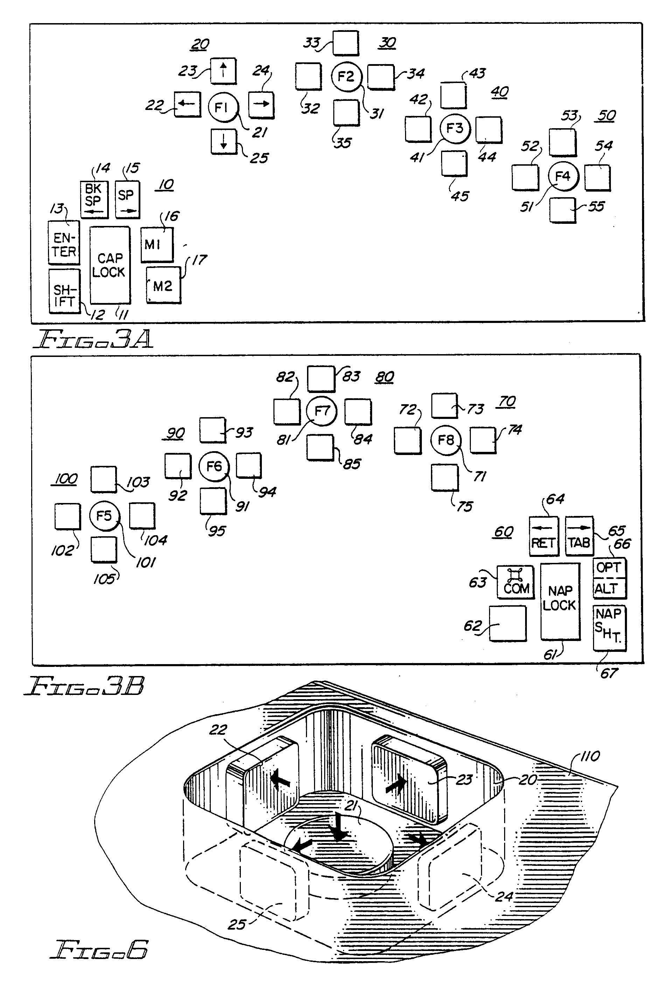

As is readily apparent from an examination of Figures 3A and 3B, a large number of additional functions are left unassigned; and these may be individually assigned for particular programs to be operated by the keyboard in accordance with function key designations for those programs. Because such a large number of function key assignments are possible, many of the multiple key operations which are common with conventional "QWERTY" keyboards used as computer input devices may be eliminated. It is possible to eliminate most, if not all, of the "ALT" key operations with other letters which have become commonplace when "QWERTY" keyboards are used as computer input devices.

In conjunction with all of Figures 1, 2, and 3, it should be noted that the thumb controls, which are the same in all modes of operation, are significant. First, all of the function keys are controlled by the thumbs, so that their use never conflicts with operating any other character keys by the eight fingers. For example, the SHIFT key 12 can be held, operated, or engaged by the knuckle of the right thumb and this will not interfere with any other finger actuation of any other key on either hand. This is to be contrasted to a conventional keyboard where, for example, holding down the SHIFT key with the right little finger, makes it impossible to simultaneously use that finger to strike the "APOSTROPHE" or "QUOTE" key and difficult to reach the "Y" key. In addition, all of the common special, non-character keys (SPACE, BACKSPACE, SHIFT, CAPS LOCK, ENTER, MICE ON, RETURN, TAB, NAP SHIFT, NAP LOCK, OPTION and CONTROL, and COMMAND or ALT) are controlled by the thumbs exclusively. This permits a logical grouping that differentiates these keys from the character keys. The character keys are used solely for the purpose of character input or for function input (for the combination NAP/shift) mode of operation. Since the function of all of the thumb keys never change, irrespective of the mode of operation of the keyboard, these keys are a constant reference and remembering their functions becomes easier.

Some current computer programs use control sequences which require simultaneous operation of pairs of keys. Such keys are all thumb operated and are arranged to permit such simultaneously operation, either by locating them side-by-side or diagonally across from one another.

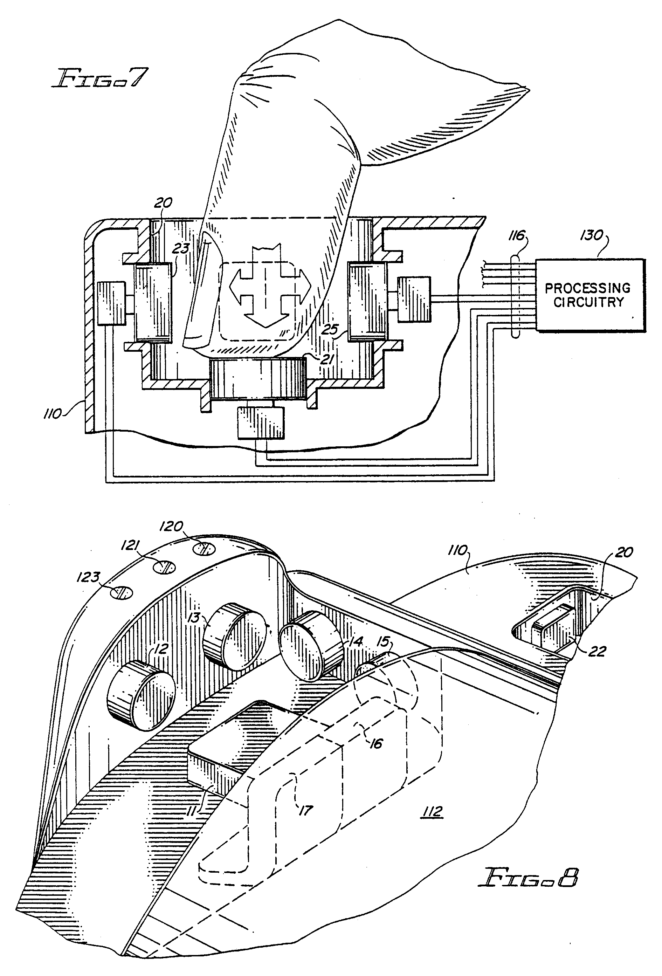

As is more apparent from a subsequent discussion of Figures 4 through 8, the right thumb tip controls both the SPACE and BACK SPACE keys 15 and 14 respectively. Typists are accustomed to using the right thumb for the space function. Because the SPACE key 15 moves the insertion point to the right, it is located to the right of the BACKSPACE key 14. Thus, pushing the right thumb tip forward on the left key (key 14) moves the insertion point to the left (backspace). Similarly, pushing the right thumb tip forward on the right hand key 15 moves the insertion point right (space), which is an intuitively logical and easily remembered arrangement.

The left thumb closely parallels the right thumb in function in various ways, so that the learning process is made simpler and the key use more intuitive and more easily remembered. For example, the left thumb tip (the B figures of Figures 1 through 3) controls the TAB key 65 and RETURN key 64. With an operationa design paralleling the right hand, the thumb tip key which is to the left on the left hand actuates the RETURN key 64. The thumb tip key 65 which is engaged by an operational move of the left thumb to the right actuates the TAB key 65. Thus, the left key moves the insertion point to the left and the right key moves it to the right. This is a logical, easily remembered assignment of these functions.

The SHIFT key 12 is actuated by flexing the right thumb outward to engage the key 12. CAP LOCK key 11 is actuated by pushing down the locking key located directly below the right thumb. The CAP LOCK key 11 provides tactile feedback by physically locking in the lowered position and it pops up when released. A similar function exists for the NAP LOCK key 61. The NAP LOCK key 67 and the NAP key 61 operate analogously to the SHIFT key 12 and the SHIFT LOCK key 11, except that these keys 67 and 61 are controlled by the left thumb. The SHIFT key 12 and the NAP SHIFT key 67 are designed to be actuated by the respective thumb knuckles. This is accomplished by a jamming and bracing action which has the effect of making it practical to simultaneously activate one of the character keys with a finger on the same hand, or even other simultaneous thumb functions; for example "SHIFT" and "ENTER, or "SPACE" may be simultaneously operated by the thumb.

Two other functions for the right hand are the mouse "click" or mouse buttons 16 and 17, which are actuated by the right thumb and are designed to be compatible with an inward thumb pressure. This is a natural gripping function of the hand; and for keyboards with a mouse incorporated (not shown), it is a convenient and natural increase of the grip on the keyboard unit during the time it may be moved to produce a mouse control.

An understanding of the physical structure now may be gained by reference to Figures 4 through 8. Figure 4 is an overall perspective view of the right-hand portion of the keyboard, the key designations of which are illustrated in Figures 1A, 2A, and 3A. The right-hand keyboard comprises a base 110 with a raised central portion 112 which is designed to underlie and fit against the palm of the right hand. The thumb is inserted into the key switch position 10 which is in the form of a three sided opening adjacent the thumb which effectively wraps around and extends into the opening from the lower left along side the raised central portion 112 as viewed in Figure 12. Each of the four finger positions 20, 30, 40, and 50 are rectangular wells located to the upper right of the raised central portion 112 of the device as viewed in Figure 4. The locations of the thumb position 10 and the wells 20, 30, 40, and 50 are selected to correspond to a natural relaxed position of the hand; so that the finger tips of the index, middle, ring, and little finger extend into the wells 20, 30, 40, and 50, respectively, when the thumb extends alongside the left hand edge of the raised portion 112.

Key switch designations for those switches in the thumb position 10 and the index finger position 20, which correspond to the similarly numbered positions in Figures 1A, 2A, and 3A, are indicated for these positions. The corresponding numbering has not been provided for the other positions (30, 40, 50) in order to avoid unnecessary cluttering of the drawing. The switch close contacts respectively to supply signals over a cable 116 of the type commonly used with standard computer keyboards to operate associated processing circuitry to perform the function called for by the operation of the various keys for the keyboard.

Three indicator lights 120, 121, and 122 are incorporated alongside the thumb position 10 in the upper wall to the left of the position 10 to provide an indication of the mode of operation of the keyboard. When all of the lights are off, the keyboard is operated in its lower-case alphabetic mode illustrated in Figures 1A and 1B. When a green light 120 is illuminated, the keyboard is operated in the SHIFT (upper case) mode, which means that the thumb switch 12 is operated. A yellow light 121 is used to indicate that the CAPS LOCK switch 11 is on or closed, and a red light 122 is used to indicate that the NAP mode has been selected. A combination of both the yellow light 121 and red light 122 on indicates that the combination NAP and CAPS LOCK mode, illustrated in Figures 3A and 3B, has been selected. Consequently, an operator readily may ascertain the state of operation of the keyboard by reference to the condition of the indicator lights 120, 121, and 122.

Figure 5 is a top view of the key position portion of the device of Figure 4 and illustrates the relative locations of the different switches within the thumb and finger wells 10, 20, 30, 40 and 50. The pattern of the five keys in each of the finger wells as well as the seven keys in the thumb well readily may be ascertained from an examination of this figure. Not all of the reference numbers for all of these keys are provided in Figure 5 since the designations are identical to the layout shown in Figure 2A located on the same sheet of drawings; and a ready comparison may be made with that figure to the layout of Figure 5 to ascertain the reference numbers of the other keys shown in Figure 5. To show all of these reference numbers would result in unnecessary cluttering of Figure 5.

Figure 6 is a perspective figure showing the orientation of the various keys for each of the finger wells, and the finger well 20 has been selected for purposes of illustration. It should be noted, however, that all of the finger wells 20, 30, 40, 50, 70, 80, 90 and 100 have an identical structure to the one shown in Figure 6. Figure 7 should be examined in conjunction with Figure 6 and illustrates a finger inserted into the well 20 in a position capable of operating all five of the keys, depending upon the direction of movement of the finger within that well. The arrows shown in Figure 6 show the different directions of movement which are used to effect operation of the various keys. The keys themselves operate switches, which may be of any suitable type, commonly used with data input keyboards, to close circuits thereby supplying signals over a cable 116 to processing circuitry 130.

Figure 7 illustrates in detail the bottom switch 21, the forward switch 23 and the rearward switch 25 as operated by the right index finger of an operator placed without the well 20. From the greatly enlarged illustrations of Figures 6 and 7, it may be seen that relatively minor directional movements of the finger are all that is required to operate the five switches associated with that finger to produce the desired output. Comparable orientations of the fingers with respect to the keys in the other wells 30, 40, 50, 70, 80, 90, and 100, illustrated previously in the layouts of Figures 1 through 3 are provided for each of the remaining finger wells for the fingers of both hands.

As is apparent from Figures 6 and 7, the tactile feedback for each finger is different (since each key touches a different part of the finger) for each of the five keys operated by that finger. This provides immediate verification to the operator and opportunity to correct possible errors. On conventional keyboards, each key feels the same as every other key.

Figure 8 is an enlarged representation of the thumb position 10 for the thumb of the right hand, illustrating the various switches operated by the right thumb when the hand of the operator grips the raised portion 112 of the right hand portion of the keyboard. Figure 8 is greatly exaggerated in order to more clearly show the details of the key switches 11 through 17 which are operated by the thumb of the right hand.

Only the right hand half of the keyboard is illustrated in Figures 4 through 8. It should be understood, however, that the left hand portion is a mirror image of the right hand portion and is identical to the right hand portion in all respects except that the key designations are those of Figures 1B, 2B and 3B for the different modes of operation. Because the right hand and left hand portions of the keyboard are separate units, they may be placed at any comfortable convenient location, either close together or spaced apart. When the two portions are spaced apart, it is possible to locate text materials directly in front of the operator between the two keyboard sections for the two hands. This placement is difficult or impossible to accomplish with conventional computer keyboards, but is a natural placement for the keyboard illustrated in the drawings.

An additional advantage is obtained from allowing the right and left hand portions to be separated at a comfortable shoulder width spacing. Specifically, this allows the unit to perate more comfortably at a desk top height (about 30" above the floor) as opposed to the lower height (about 26" above the floor) considered preferable for conventional keyboards.

It also should be noted that the construction of the two section keyboard (the right hand section of which is illustrated in Figures 4 through 8) results in a total area coverage of both sections which is smaller than the smallest currently available keyboard. Prototype models of the keyboard which has been described above and which is shown in the drawings occupy approximately 75 square inches.

One of the most popular personal computers, which has one of the smallest keyboards in popular usage, still has a footprint of approximately 88 square inches for the keyboard and required mouse. Personal computers designed for business use have keyboards which require 150 square inches to over 180 square inches. Some of these keyboards have as many as seven rows of keys. The functional difference in space required for the keyboard which has been shown and described above is even greater than the actual area of the keyboard of this invention compared to conventional keyboards. This results because conventional keyboards also require additional space for the operator to rest or float the palms of both hands. In contrast, the keyboard of this invention, and illustrated most clearly in Figure 4, has approximately 2/3 of the entire keyboard area functioning as a built-in palm rest. This is the area under the central portion 112 of Figure 4.

Another important consideration for the keyboard which has been described is that it essentially has 47 function keys available to the operator. The most popular business computer in its original style, has only eight function keys; and new models of this computer have increased the function keys to 12. All of the function keys of the keyboard shown in the drawings and described above are "home" keys. No function keys on any other computer keyboard presently available are "home" keys. This is a significant and important distinction. In addition, because all of the keys of the keyboard described above are uniquely accessible by only one finger moving in only one direction (no combination moves required) intuitive linkage to function is possible. For example, movement of the extreme left finger (the one in position 100) to left in a word processing program could actuate the key 102 and move the left margin left. Moving the same finger right could actuate the key 104, and move the left margin right. The extreme right finger also could have a parallel action on the right margin and so forth, when the keyboard is operated in the combination CAP LOCK/NAP LOCK mode illustrated in Figures 3A and 3B. Other logical function movements for the function mode of operation for the keyboard also will become readily apparent to programmers and operators.

As noted from an examination of Figures 1A and 1B, the keyboard of this invention has a maximum of only 64 mechanical keys. Other currently popular personal computers have between 79 and 104 keys at the present time. The keyboard of this invention has fewer mechanical keys than any other common computer keyboard and yet is capable of significantly increased numbers of individual key outputs as a result of the various controls operated by the right hand and left hand thumbs.

Various changes and modifications will become apparent to those skilled in the art without departing from the true scope of the invention. For example, the shape of the keyboard device illustrated in Figure 4 may be varies, so long as the relative positions of the thumb and finger wells remain the same for ready access by the thumbs and fingers of the operator. The particular shape of the switches also is not important and the finger wells could be circular as well as rectangular. Those character designations which depart from a strict duplication of the "QWERTY" keyboard operation also may be varied without departing from the invention, particularly for operation in the combination CAP LOCK/NAP LOCK mode which opens up the keyboard for a large number of potential "function" manipulations. The keyboard may be produced as a single unit with positions for both hands instead of as two separate right hand and left hand units. The operation would be the same, whether the two portions of the keyboard are somehow linked or attached together as for the two separate halves as described in conjunction with the drawings.

## Claims

1. A keyboard for controlling data input of a full set of desired characters comprising:
a housing (110), key switches (10 to 55 and 60 to 105) arranged on the housing (110) in an overall pattern corresponding substantially to the non-chording QWERTY style key arrangement wherein each data input character is produced by actuation of a single discrete key switch, and the key switches (10 to 55 and 60 to 105) also being arranged in additional predetermined patterns at each of the thumb and finger positions for separate actuation by the thumb and finger of an operator's hand, the key switches at each of the finger positions being arranged in a first predetermined pattern at each finger position and the key switches at the thumb position being arranged in a second predetermined pattern, characterised in that the housing (110) has a raised central portion thereon which is devoid of keys and adapted to generally underlie and fit against the palm of a hand to support the hand from beneath the palm only through the palm resting on the raised central portion (112), and has thumb and finger positions (10, 20, 30, 40, 50, 60, 70, 80 and 100) adjacent the raised central portion (112) arranged in a pattern generally corresponding to the relaxed position of a hand with the fingers extending downwardly from a generally horizontal plane when the palm of the hand is placed on the raised central portion (112) with the palm of the hand remaining in one basic position resting on the raised portion (112) throughout operation of the keyboard; at least each of said finger positions comprising individual, substantially upwardly open-top fingertip wells (20, 30, 40, 50) in the housing (110) to freely receive the fingertips of an operator, each of the wells having substantially vertical walls and a bottom, with a first key switch (21, 31, 41, 51, 71, 81, 91, or 101) located in the bottom of each of the wells, and at least one other key switch (such as 22) located on a vertical wall of each of said wells, such that each key switch in each well is actuated by movement of the fingertips alone without requiring movement of the hand relative to the raised central portion (112), each key switch being actuated by a distinct and different portion of the fingertip in each such well to provide a different tactile feedback to the operator for each different key switch contacted by the fingertips in each well, sufficient key switches being provided in the wells so that the full set of desired characters and functions are accessible without requiring movement of the hand from the one basic position; the thumb position comprising a thumb cavity (110) having bottom and upright sides located, respectively, adjacent the end and left and right sides of a thumb placed in the thumb cavity, with the key switches at the thumb position comprising switches arranged in the bottom (11) and on the upright sides (switches 12, 13, 14, 15, 16 & 17) of the thumb cavity (10) in the second predetermined pattern, such that upon actuation, each such switch (11, 12, 13, 14, 15, 16, 17) touches a distinct and different portion of the thumb to provide a different tactile feedback to the operator for each different key switch contacted by the thumb; and the switches are coupled (via 116) with a processing device.

2. The keyboard according to Claim 1 further characterized in that each of the fingertip wells (20, 30, 40, 50, 60, 70, 80, 90 & 100) is of a generally rectangular shape and extends downwardly a predetermined depth from the upper surface of the keyboard housing (110) with the first key switches (21, 31, 41, 51, 71, 81, 91, 101) located in the bottom of each of the wells and second, third, fourth, and fifth key switches (such as 22, 23, 24 and 25) on the four sides, respectively, of each well surrounding the bottom thereof, so that selected switches in each of said wells may be operated by a finger pressing downwardly to operate the switch in the bottom of the well and pressing forward, backward, left and right to selectively operate each of the respective other ones of the second, third, fourth and fifth switches.

3. The keyboard according to Claim 2 further characterized in that the thumb position (10 or 60) is located on one side of the raised central portion (112) of the housing (110) to permit the central portion (112) to be grasped by the thumb of an operator.

4. The keyboard according to Claim 3 further characterized in that the predetermined pattern of key switches at the thumb position (10) comprises at least first and second thumb switches (12/13 or 14/15 or 16/17) on one of the upright sides of the thumb receiving cavity (10).

5. The keyboard according to Claim 4 further characterized in that each of the three upright sides of the thumb receiving cavity (10) has two switches (12/13; 14/15; 16/17) located side-by-side thereon for engagement by said thumb, and the bottom of the thumb receiving cavity (10) has a bottom switch (11) therein.

6. The keyboard according to Claim 1 further characterized in that the predetermined pattern of key switches at the thumb position (10) comprises at least first and second thumb switches (12/13 or 14/15 or 16/17) on one of the three upright sides of the thumb receiving cavity (10).

7. The keyboard according to Claim 6 further characterized in that each of the three upright sides of the thumb receiving cavity (10) has two switches (12/13; 14/15; 16/17) located side-by-side thereon for engagement by said thumb, and the bottom of the thumb receiving cavity (10) has a bottom switch (11) thereon.

8. The keyboard according to Claim 2, further characterized by: a mode shift key switch (67) to select an operating mode and operated by a thumb to change the operating mode of the keyboard, such that for at least one finger, the four key switches (22, 23, 24, 25) which are grouped about that finger in one operating mode of the keyboard become cursor control keys corresponding to upward, downward, left and right cursor keys.

9. A keyboard for operating typewriters, computers and the like to control the data input thereto comprising: physically separate right and left mechanically independent keyboard housings (110) each of which has an overall external configuration substantially the size of a human hand and a raised central portion (112) devoid of keys on each to generally underlie and fit against and support the palm of a hand resting on the raised central portion (112), and thumb and finger positions (10, 20, 30, 40, 50, 60, 70, 80, 90, 100) are located adjacent the raised central portions with such positions generally corresponding to the relaxed positions of the thumb and fingers of the respective hands of an operator placed on the raised central portions (112) of the right and left keyboard housings with the palms of each of the hands remaining in one basic position resting on the central portions (112) without movement from such one basic position throughout the operation of the keyboard; a plurality of switches arranged in an overall pattern corresponding substantially to the non-chording QWERTY key arrangement where alpha-numeric characters each are produced by activation of a single discrete switch and also arranged in additional predetermined patterns at each of the thumb and finger positions of said right and left keyboard housings for separate actuation by the respective thumb and fingers of a hand placed on each of said right and left keyboard housings at such positions with the palms of the hands resting on the raised central portions, the switches at the finger positions (20, 30, 40, 50, 70, 80, 90 & 100) arranged in a first predetermined pattern and the switches at the thumb positions (10 and 50) arranged in a second predetermined pattern, at least each of said finger positions comprising individual, substantially vertical, open-top fingertip wells (such as 20) for freely receiving the ends of the fingers of an operator and having substantially vertical walls and a bottom, with a first switch (21, 31, 41, 51, 71, 81, 91, 101) located in the bottom of each of the wells and at least one other switch (22, 32, 42, 52, 72, 82, 92, 102) located on a vertical wall of each of the wells, such that each switch in each well is operated by a distinct and different portion of the fingertip in each such well to provide a different tactile feedback to the operator for each different switch contacted by the fingertips in each well; and the thumb position comprising a thumb cavity (10) having bottom and upright sides located, respectively, adjacent the end and left and right sides of a thumb placed in the thumb cavity, with the key switches at the thumb position comprising switches arranged in the bottom (11) and on the upright sides (12, 13, 14, 15, 16, 17) of said thumb cavity in the second predetermined pattern, such that upon actuation, each such switch (11, 12, 13, 14, 15, 16, 17) touches a distinct and different portion of the thumb to provide a different tactile feedback to the operator for each different switch contacted by the thumb.

10. The keyboard according to Claim 9 further characterized in that the thumb position (10 or 60) is located on one side of the raised central portion (112) of the housing (110) to permit the central portion (112) to be grasped by the thumb of an operator.

11. The keyboard according to Claim 9 further characterized in that each of the fingertip wells (20, 30, 40, 50, 60, 70, 80, 90 & 100) is of a generally rectangular shape and extends downwardly a predetermined depth from the upper surface of the keyboard housing (110) with the first key switches (21, 31, 41, 51, 71, 81, 91, 101) located in the bottom of each of the wells and second, third, fourth and fifth key switches (such as 22, 23, 24 & 25) on the four sides, respectively, of each well surrounding the bottom thereof, so that selected switches in each of said wells may be operated by a finger pressing downwardly to operate the switch in the bottom of the well and pressing forward, backward, left and right to selectively operate each of the respective other ones of the second, third, fourth and fifth switches.

12. The keyboard according to Claim 9 further characterized by a mode shift key (67) to select an operating mode and operated by a thumb to change the operating mode of the keyboard, such that in one operating mode of the keyboard the four key switches (22, 23, 24, 25 or 72, 73, 74, 75) which are grouped about each of at least two fingers become cursor control keys corresponding to upward, downward, left and right cursor keys; and one finger causes cursor movement to be effectuated relatively more rapidly, and the other finger causes cursor control to be effectuated relatively more slowly.

13. The keyboard according to Claim 11 further characterized in that the predetermined pattern of key switches at the thumb position (10) comprises at least first and second thumb switches (12/13 or 14/15 or 16/17) on one of the three upright sides of the thumb receiving cavity (10).

14. The keyboard according to Claim 13 further characterized in that each of the three upright sides of the thumb receiving cavity (10) has two switches (12/13; 14/15; 16/17) located side-by-side thereon for engagement by said thumb, and the bottom of the thumb receiving cavity (10) has a bottom switch (11) therein.

## Patentansprüche

1. Eine Tastatur zur Steuerung des Dateneingangs eines vollständigen Satzes von gewünschten Zeichen mit:
einem Gehäuse (110), Steuertasten (10 bis 50 und 60 bis 105) in der Zuordnung zu dem Gehäuse (110) gemäß einem Gesamtmuster im wesentlichen entsprechend der sogenannten Non-chording QWERTY Style Key-Anordnung, wobei jedes Dateneingangszeichen durch Betätigen einer einzelnen diskreten Steuertaste erzeugt wird, wobei die Steuertasten (10 bis 55 und 60 bis 105) außerdem in vorbestimmten Zusatzmustern in jeder von Daumen- und Fingerpositionierungen zur separaten Betätigung durch den Daumen und Finger der einen Hand einer Bedienungsperson angeordnet sind und wobei die Steuertaste in jeder Fingerpositionierung entsprechend einem ersten vorbestimmten Muster in jeder Fingerpositionierung und die Steuertasten in der Daumenpositionierung entsprechend einem zweiten vorbestimmten Muster angeordnet sind, **dadurch gekennzeichnet**, daß das Gehäuse (110) einen rückenförmig über die Gehäusekontur hinausragenden Zentralteil aufweist, der frei von Tasten und generell so ausgebildet ist, daß er eine menschliche Hand im Bereich des Handballens unterstützt und an diesem von unten her anliegt, um die Hand allein durch den auf der rückenförmigen Erhebung (112) aufliegenden Handballen zu stützen und daß das Gehäuse im Bereich der zentralen Erhebung (112) Daumen- und Fingerpositionierungen (10, 20, 30, 40, 50, 60, 70, 80 und 100) in einer Bemusterung aufweist, die sich aus der Haltung der Finger ergibt, wenn die Finger der zur Bedienung der Tastatur entspannt in einer im wesentlichen horizontalen Haltung im Ballenbereich von der Erhebung unterstützten Hand aus nach unten weisen; wobei vorzugsweise jede der Fingerpositionierungen ein einzelner, im wesentlichen nach oben offener Fingerspitzenschacht (20, 30, 40, 50) im Gehäuse (110) ist, um in ihrer Gesamtzahl für die Fingerspitzen einer Bedienungsperson frei zugänglich zu sein, wobei jeder Fingerspitzenschacht im wesentlichen vertikale Seitenwände und einen Boden aufweist und dem Boden jedes Fingerspitzenschachts eine erste Schalttaste (21, 31, 41, 51, 71, 81, 91 oder 101) und zumindest eine weitere Schalttaste (wie die Schalttaste 22) einer vertikalen Seitenwand jedes Fingerspitzenschachts derart zugeordnet ist, daß jede Schalttaste in jedem Fingerspitzenschacht durch Bewegung allein der Fingerspitzen ohne die Notwendigkeit der Bewegung der Hand relativ zum zentralen Rückenteil (112) betätigt werden kann, wobei jede Schalttaste durch einen bestimmten anderen Teil der im jeweiligen Fingerschacht befindlichen Fingerspitzen zu betätigen ist, um der Bedienungsperson ein anderes ertastetes Rückmeldesignal von jeder in jeweils einem der Fingerspitzenschächte im Kontakt mit dieser Schalttaste befindlichen Fingerspitze zu liefern, so daß die Gesamtheit der geforderten Zeichen und Funktionen bewirkt wird, ohne daß die Hand aus ihrer Grundposition herausbewegt werden müßte; daß weiter die Daumenpositionierung einen Daumenschacht (110) einschließt, der seinerseits einen Boden und hochstehende Seitenwände in der Zuordnung zum Ende sowie zur linken und zur rechten Seite des in den Daumenschacht hineinragenden Daumens aufweist, wobei die Daumenpositionierung Tasten in der Zuordnung zum Boden (11) und den hochstehenden Seitenwänden des Daumenschachtes in einer zweiten, derartigen Bemusterung aufweist, daß bei der Betätigung jeder dieser Tasten (11, 12, 13, 14, 15, 16, 17) ein bestimmter anderer Teil des Daumens berührt wird, um ein unterschiedliches Rückmeldetastsignal an die Bedienungsperson zu liefern.

2. Die Tastatur nach Anspruch 1, die ferner **dadurch gekennzeichnet** ist, daß jeder der Fingerspitzenschächte (20, 30, 40, 50, 60, 70, 80, 90 und 100) eine im wesentlichen rechteckige Kontur hat und in vorgegebener Längserstreckung von der Oberseite des Tastaturgehäuses (110) aus nach unten sich erstreckt, wobei die ersten Steuertasten (21, 31, 41, 51, 71, 81, 91, 101) im Boden des jeweiligen Schachts und zweite, dritte, vierte und fünfte Schalttasten (wie 22, 23, 24 und 25) den vier Seiten des jeweiligen Fingerspitzenschachts, die dessen Boden umgeben, zugeordnet sind, so daß eine zu betätigende Steuertaste in jedem Fingerspitzenschacht durch Fingerdruck nach unten zur Betätigung der Steuertaste im Schachtboden bzw. durch Fingerbewegung nach vorn, rückwärts, rechts oder links zur wahlweisen Betätigung einer der zweiten, dritten, vierten und fünften Steuertaste betätigt werden kann.

3. Die Tastatur gemäß Anspruch 2, die ferner **dadurch gekennzeichnet** ist, daß die Daumenpositionierung (10 oder 60) auf der einen Seite des rückenförmig vorstehenden Zentralteils (112) des Gehäuses (110) angeordnet ist, damit der Zentralteil (112) von dem Daumen einer Bedienungsperson umgriffen werden kann.

4. Die Tastatur gemäß Anspruch 3, die ferner **dadurch gekennzeichnet** ist, daß das vorbestimmte Muster der Anordnung der Steuertasten im Bereich der Daumenpositionierung (10) zumindest erste und zweite Daumensteuertasten (12/13 oder 14/15 oder 16/17) an einer der nach oben sich erstreckenden Seiten des Daumenaufnahmeschachts (10) aufweist.

5. Die Tastatur nach Anspruch 4, die ferner **dadurch gekennzeichnet** ist, daß jeder der drei nach oben sich erstreckenden Seiten des Daumenaufnahmeschachts (10) zwei Steuertasten (12/13; 14/15; 16/17) seitlich nebeneinander zum Zusammenwirken mit dem Daumen zugeordnet sind und daß dem Boden des Daumenaufnahmeschachts (10) eine Bodensteuertaste (11) zugeordnet ist.

6. Die Tastatur nach Anspruch 1, die ferner **dadurch gekennzeichnet** ist, daß das vorbestimmte Muster der Anordnung der Steuertasten im Bereich der Daumenpositionierung (10) zumindest erste und zweite Daumensteuertasten (12/13 oder 14/15 oder 16/17) an einer der drei nach oben gerichteten Seitenwände des Daumenaufnahmeschachts (10) einschließt.

7. Die Tastatur nach Anspruch 6, die ferner **dadurch gekennzeichnet** ist, daß jeder der drei nach oben gerichteten Seitenwände des Daumenaufnahmeschachts (10) zwei Steuertasten (12/13; 14/15; 16/17) zum Zusammenwirken mit dem Daumen seitlich nebeneinander zugeordnet sind und daß dem Boden des Daumenaufnahmeschachts (10) eine Bodensteuertaste (11) zugeordnet ist.

8. Die Tastatur nach Anspruch 2, die ferner **dadurch gekennzeichnet** ist: ein Funktionswechselschalter (67) ist zur Wahl eines Betriebszustandes und durch den Daumen zu betätigen, um die Funktion der Tastatur zu verändern derart, daß für zumindest einen Finger die vier um diesen Finger herum angeordneten Steuertasten (22, 23, 24, 25) während eines Betriebszustandes der Tastatur Schiebesteuertasten mit der Verschiebemöglichkeit nach oben, unten, links und rechts werden.

9. Eine Tastatur für die Bedienung von Schreibmaschinen, Rechnern und dgl. zur Steuerung der Dateneingabe mit folgenden Merkmalen: baulich voneinander getrennte mechanisch voneinander unabhängige rechtes und linkes Tastaturgehäuse (110), von denen jedes eine Gesamtabmessung hat, die im wesentlichen der Größe einer menschlichen Hand entspricht, einen rückenförmig vorstehenden Zentralteil (112) aufweist, der von Steuertasten freigehalten ist und der Unterstützung einer Hand durch Anliegen am Handballen der aufliegenden Hand von unten her dient und nahe dem dem Gehäuse Daumen- und Fingerpositionierungen (10, 20, 30, 40, 50, 60, 70, 80, 90, 100) zugeordnet sind, wobei die Positionierungen beider Tastengehäuse Daumen und Fingern jeweils einer Hand einer Bedienungsperson in entspannter Haltung bei auf dem jeweiligen rückenförmigen Zentralteil (112) des rechten bzw. linken Tastaturgehäuses aufliegender Hand angepaßt sind, wobei die Hand während der gesamten Zeit der Betätigung der Tastatur in ihrer Grundhaltung unverändert im Ballenbereich von dem Zentralteil des jeweiligen Tastaturgehäuses unterstützt bleibt; eine Mehrzahl von Schaltern in der Anordnung eines Gesamtmusters, das im wesentlichen der sogenannten Non-chording QWERTY Key-Anordnung entspricht, wobei alphanumerische Zeichen durch jeweilige Aktivierung eines einzelnen diskreten Schalters erzeugt werden und außerdem in einer Anordnung von zusätzlichen vorbestimmten Mustern im Bereich jeder der Daumen- und Fingerpositionierungen des rechten und linken Tastaturgehäuses zur separaten Betätigung durch den jeweiligen Daumen bzw. die jeweiligen Finger einer auf dem rückenförmigen Zentralteil des rechten bzw. linken Tastaturgehäuses im Ballenbereich ruhenden Hand, wobei die Schalter in den Fingerpositionierungen (20, 30, 40, 50, 70, 80, 90 und 100) in einem ersten vorbestimmten Muster angeordnet sind, während die Schalter in den Daumenpositionierungen (10 und 50) in einem zweiten vorbestimmten Muster angeordnet sind, wobei zumindest jede der Fingerpositionierungen ein einzelner, im wesentlichen vertikaler, oben offener Fingerspitzenschacht (wie 20) für die Enden der Fingerspitzen einer Bedienungsperson mit im wesentlichen vertikalen Seitenwänden und einem Boden ist und einen ersten Schalter (21, 31, 41, 51, 71, 81, 91, 101) im Boden des Fingerspitzenschachts und zumindest einen anderen Schalter (22, 32, 42, 52, 72, 82, 92, 102) in einer vertikalen Seitenwand von jedem der Schächte aufweist derart, daß jeder Schalter in jedem Schacht mittels eines bestimmten, aus mehreren Abschnitten einer Fingerspitze ausgewählten Abschnitt zu betätigen ist, um ein unterschiedlich ertastetes Rückmeldesignal zur Bedienungsperson von jedem einzelnen, von den Fingerspitzen in jedem Schacht kontaktierten Schalter zu liefern; die Daumenpositionierung enthält einen Daumenschacht (10) mit einem Boden und nach oben gerichteten Seitenwänden in der Anordnung nahe dem Daumenende und seitlich rechts und links von dem in den Daumenschacht eingeführten Daumen, wobei die Steuertasten in der Daumenpositionierung Schalter im Boden (11) und den nach oben gerichteten Seitenwänden (12, 13, 14, 15, 16, 17) des Daumenschachts in der Anordnung des zweiten vorbestimmten Musters sind derart, daß bei Betätigung jeder dieser Schalter (11, 12, 13, 14, 15, 16 17) mit einem bestimmten unterschiedlichen Teil des Daumens zusammenwirkt, um ein unterschiedliches ertastetes Rückmeldesignal an die Bedienungsperson für jeden der verschiedenen vom Daumen kontaktierten Schalter zu liefern.

10. Die Tastatur nach Anspruch 9, die ferner **dadurch gekennzeichnet** ist, daß die Daumenpositionierung (10 oder 60) auf der einen Seite des rückenförmigen Zentralteils (112) des Gehäuses (110) angeordnet ist, damit der Zentralteil (112) vom Daumen einer Bedienungsperson umgriffen werden kann.

11. Die Tastatur nach Anspruch 9, die ferner **dadurch gekennzeichnet** ist, daß jeder der Fingerspitzenschächte (20, 30, 40, 50, 60, 70, 80, 90 und 100) eine im wesentlichen rechteckige Kontur hat und in vorgegebener Längserstreckung von der Oberseite des Tastaturgehäuses (110) aus nach unten sich erstreckt, wobei die ersten Steuertasten (21, 31, 41, 51, 71, 81, 91, 101) im Boden des jeweiligen Schachts und zweite, dritte, vierte und fünfte Schalttasten (wie 22, 23, 24 und 25) den vier Seiten des jeweiligen Fingerspitzenschachts, die dessen Boden umgeben, zugeordnet sind, so daß eine zu betätigende Steuertaste in jedem Fingerspitzenschacht durch Fingerdruck nach unten zur Betätigung der Steuertaste im Schachtboden bzw. durch Fingerbewegung nach vorn, rückwärts, rechts oder links zur wahlweisen Betätigung einer der zweiten, dritten, vierten und fünften Steuertasten betätigt werden kann.

12. Die Tastatur nach Anspruch 9, die ferner **gekennzeichnet** ist durch einen Funktionswechselschalter (67) zur Auswahl einer Arbeitsweise, der durch einen Daumen zur Änderung der Arbeitsweise der Tastatur zu betätigen ist, so daß bei einer Arbeitsweise der Tastatur die vier Steuertasten (22, 23, 24, 25 oder 72, 73, 74, 75), die um jeden von zumindest zwei Fingern angeordnet sind, nach oben, unten, links und rechts verschiebbare Schiebetasten sind, wobei ein Finger die zu bewirkende Schiebebewegung relativ rascher und der andere Finger die zu bewirkende Schiebebewegung relativ langsamer bewirkt.

13. Die Tastatur nach Anspruch 11, die ferner **dadurch gekennzeichnet** ist, daß das vorbestimmte Muster der Steuertasten im Bereich der Daumenpositionierung (10) zumindest erste und zweite Daumentasten (12/13 oder 14/15 oder 16/17) auf einer der drei nach oben gerichteten Seitenwände des Daumenaufnahmeschachts (10) einschließt.

14. Die Tastatur nach Anspruch 13, die ferner **dadurch gekennzeichnet** ist, daß jeder der drei nach oben gerichteten Seitenwände des Daumenaufnahmeschachts (10) zwei Steuertasten (12/13; 14/15; 16/17) nebeneinander angeordnet zugeordnet sind, um vom Daumen beeinflußt zu werden, während dem Boden des Daumenaufnahmeschachts (10) eine Bodensteuertaste (11) zugeordnet ist.

## Revendications

1. Un clavier de commande d'entrée de données d'un ensemble complet de caractères souhaités comprenant:
un boîtier (110), des commutateurs de touches (10 à 55 et 60 à 105) agencés sur le boîtier (110) dans une configuration globale correspondant sensiblement à l'agencement de touches du style QWERTY sans liaison dans lequel chaque caractère d'entrée de donnée est produit par un actionnement d'un commutateur discret unique de touche, et les commutateurs de touches (10 à 55 et 60 à 105) étant également agencés selon des considérations additionnelles prédéterminées à chacune des positions du pouce et des doigts en vue d'un actionnement séparé par le pouce et le doigt de la main de l'opérateur, les commutateurs de touches de chacune des positions de doigts étant agencés selon une première configuration prédéterminée à chaque position de doigt et les commutateurs de touches à la position du pouce étant agencés selon une deuxième configuration prédéterminée, caractérisé en ce que boîtier (110) comprend une partie centrale surélevée qui est exempte de touches et qui est apte à être généralement sous-jacente à la paume d'une main et à s'ajuster contre elle afin de supporter la main à partir du dessous de la paume seulement en amenant la paume à reposer sur la partie centrale surélevée (112) et comprend des positions de pouces et de doigts (10, 20, 30, 40, 50, 60, 70, 80 et 100) adjacentes à la position centrale surélevée (112) agencées selon une configuration correspondant généralement à la position détendue d'une main, les doigts s'étendant vers le bas à partir d'un plan généralement horizontal lorsque la paume de la main est placée sur la partie centrale surélevée (112), la paume de la main restant dans une position de base en reposant sur la partie surélevée (112) pendant tout l'actionnement du clavier; au moins chacune desdites positions de doigts comprenant des puits individuels de bouts des doigts sensiblement ouverts vers le haut (20, 30, 40, 50) ménagés dans le boîtier (110) afin de recevoir librement les bouts des doigts d'un opérateur, chacun des puits comprenant des parois sensiblement verticales et un fond, un premier commutateur de touche (21, 31, 41, 51, 71, 81, 91, ou 101) situé au fond de chacun des puits, et au moins un autre commutateur de touches, (par exemple 22) positionné sur une paroi verticale de chacun desdits puits, d'une manière telle que chaque commutateur de touche de chaque puits est actionné par un déplacement des bouts des doigts seuls, sans exiger le déplacement de la main par rapport à la partie centrale surélevée (112), chaque commutateur de touche étant actionné dans chacun des ces puits par une partie distincte et différente du bout du doigt de façon à fournir à l'opérateur une rétroaction tactile différente pour chaque commutateur différent de touche avec lesquels les bouts des doigts sont en contact dans chaque puits, des commutateurs suffisants de touches étant prévus dans les puits pour que tout l'ensemble des caractères et des fonctions souhaités soit accessible sans exiger de déplacement de la main à partir d'une position de base; la position du pouce comprenant une cavité de pouce (110) pourvue d'un fond et de côtés verticaux, positionnés, respectivement, près de l'extrémité et des côtés gauche et droit d'un pouce placé dans la cavité de pouce, les commutateurs de touches de la positon de pouce comprenant des commutateurs agencés au fond (11) et sur les côtés verticaux (commutateurs 12, 13, 14, 15, 16 et 17) de la cavité de pouce (10) dans la deuxième configuration prédéterminée, afin que chacun de ces commutateurs (11, 12, 13, 14, 15, 16 et 17) soit en contact, lors de son actionnement, avec une partie distincte et différente du pouce afin de fournir à l'opérateur une rétroaction tactile différente pour chaque interrupteur différent de touche avec laquelle le pouce vient en contact, et les commutateurs sont couplés ( par l'intermédiaire de 18) à un dispositif de traitement.

2. Le clavier selon la revendication 1, caractérisé en outre en ce que chacun des puits (20, 30, 40, 50, 60, 70, 80, 90 et 100) de bout du doigt est d'une configuration généralement rectangulaire et s'étend vers le bas sur une profondeur prédéterminée à partir de la surface supérieure du boîtier (110) de clavier, les premiers commutateurs (21, 31, 41, 51, 71, 81, 91, 101) de touche étant situés au fond de chacun des puits et les deuxièmes, troisièmes, quatrièmes, et cinquièmes commutateurs, (par exemple 22, 23, 24 et 25) de touche étant situés sur les quatre côtés, respectivement, de chaque puits en entourant le fond de celui-ci, de sorte que des commutateurs choisis de chacun desdits puits peuvent être actionnés par un doigt qui appuie vers le bas pour actionner le commutateur du fond du puits et appuie vers l'avant, l'arrière, la gauche et la droite pour mettre en oeuvre sélectivement chacun des autres commutateurs: le deuxième, le troisième, le quatrième et le cinquième.

3. Le clavier selon la revendication 2 caractérisé en ce que la position (10 ou 60) de pouce est située sur un côté de la partie centrale surélevée (112) du boitier (110) afin de permettre à la partie centrale (112) d'être saisie par le pouce d'un opérateur.

4. Le clavier selon la revendication 3 caractérisé en outre en ce que la configuration prédéterminée de commutateurs de touches à la position (10) du pouce comprend au moins un premier et un deuxième commutateurs (12/13 ou 14/15 ou 16/17) de pouce sur l'un des côtés verticaux de la cavité (10) recevant le pouce.

5. Le clavier selon la revendication 4 caractérisé en outre en ce que chacun des trois côtés verticaux de la cavité (10) recevant le pouce comprend deux commutateurs (12/13; 14/15; 16/17) positionnés côte à côte sur ce côté pour que ledit pouce y vienne en prise, et le fond de la cavité (10) recevant le pouce comprend un commutateur de fond (11 ).

6. Le clavier selon la revendication 1 caractérisé en outre en ce que la configuration prédéterminée de commutateurs de touches à la position (10) de pouce comprend au moins un premier et un deuxième commutateurs de pouce (12/13 ou 14/15 ou 16/17) sur l'un des trois côtés verticaux de la cavité (10) recevant le pouce.

7. Le clavier selon la revendication 6 caractérisé en outre en ce que chacun des trois côtés verticaux de la cavité (10) recevant le pouce porte deux commutateurs (12/13; 14/15; 16/17) positionnés côte à côte de manière que le pouce y vienne en prise, et le fond de la cavité (10) recevant le pouce inclut un commutateur inférieur (11).

8. Le clavier selon la revendication 2, caractérisé en outre par: un commutateur (67) de touche de changement de mode servant à choisir un mode de fonctionnement et mis en oeuvre par un pouce de manière à modifier le mode de fonctionnement du clavier d'une façon telle que, pour au moins un doigt, les quatre commutateurs (22, 23, 24, 25) de touches qui sont groupés autour de ce doigt deviennent, dans un mode d'actionnement du clavier, des touches de commande de curseur correspondant aux touches de déplacement montant, descendant, vers la gauche et vers la droite, du curseur.

9. Un clavier d'actionnement de machines à écrire, ordinateurs et similaires, servant à commander l'entrée de données à ceux-ci, comprenant: des boîtiers séparés gauche et droit mécaniquement indépendants (110) de clavier, chacun d'eux présentant une configuration externe globale sensiblement de la dimension d'une main humaine et comportant une partie centrale surélevée (112), dépourvue de touches et apte à être généralement sous-jacente à la paume d'une main reposant sur la partie centrale surélevée (112) et à supporter cette paume, et des positions de pouce et de doigt (10, 20, 30, 40, 50, 60, 70, 80, 90, 100) positionnées près des parties centrales surélevées, ces positions correspondant généralement aux positions détendues du pouce et des doigts des mains respectives d'un opérateur placées sur les parties centrales surélevées (112) des boîtiers gauche et droit de clavier, les paumes de chacune des mains restant dans une position de base en reposant sur la partie centrale (112) sans se déplacer à partir d'une telle position de base pendant tout l'actionnement du clavier; une série de commutateurs, agencés selon une configuration d'ensemble correspondant sensiblement à l'agencement de touches QWERTY sans liaison où des caractères alphanumériques sont produits chacun par un actionnement d'un commutateur discret unique, et également agencés selon des configurations additionnelles prédéterminées à chacune des positions du pouce et des doigts desdits boîtiers gauche et droit de clavier pour un actionnement séparé par le pouce et les doigts respectifs d'une main placée sur chacun desdits boîtiers gauche et droite de clavier à ces positions, les paumes des mains reposant sur la partie centrale surélevée, les commutateurs aux positions de doigts (20, 30, 40, 50, 70, 80, 90 et 100) étant agencés selon une première configuration prédéterminée et les commutateurs aux positions des pouces (10 et 50) étant agencés selon une deuxième configuration prédéterminée, au moins chacune desdites positions de doigts comprenant des puits individuels de bouts des doigts (par exemple 20) sensiblement verticaux ouverts vers le haut pour recevoir librement l'extrémité des doigts d'un opérateur et comprenant des parois sensiblement verticales et un fond, un premier commutateur (21, 31, 41, 51, 71, 81, 91, 101) situé dans le fond de chacun des puits et au moins un autre commutateur (22, 32, 42, 52, 72, 82, 92, 102) positionné sur une paroi verticale de chacun des puits, d'une manière telle que chaque commutateur de chaque puits est mis en oeuvre par une partie distincte et différente du bout du doigt dans chacun de ces puits afin de fournir à l'opérateur une rétroaction tactile différente pour chaque commutateur différent avec lesquels les bouts des doigts viennent en contact dans chaque puits; et la position du pouce comprenant une cavité de pouce (10) pourvue d'un fond et de côtés verticaux, positionnés, respectivement, près de l'extrémité et des côtés gauche et droit d'un pouce placé dans la cavité de pouce, les commutateurs de touches de la positon de pouce comprenant des commutateurs agencés au fond (11) et sur les côtés verticaux (commutateurs 12, 13, 14, 15, 16 et 17) de la cavité de pouce (10) dans la deuxième configuration prédéterminée, afin que chacun de ces commutateurs (11, 12, 13, 14, 15, 16 et 17) soit en contact avec une partie distincte et différente du pouce afin de fournir à l'opérateur une rétroaction tactile différente pour chaque interrupteur différent de touche avec laquelle le pouce vient en contact.

10. Le clavier selon la revendication 9 caractérisé en ce que la position (10 ou 60) de pouce est située sur un côté de la partie centrale surélevée (112) du boitier (110) afin de permettre à la partie centrale (112) d'être saisie par le pouce d'un opérateur.

11. Le clavier selon la revendication 9 caractérisé en outre en ce que chacun des puits (20, 30, 40, 50, 60, 70, 80, 90 et 100) de bout du doigt est d'une configuration généralement rectangulaire et s'étend vers le bas sur une profondeur prédéterminée à partir de la surface supérieure du boitier (110) de clavier, les premiers commutateurs (21, 31, 41, 51, 71, 81, 91, 101) de touche étant positionnés au fond de chacun des puits et les deuxièmes, troisièmes, quatrièmes, et cinquièmes commutateurs, (par exemple 22, 23, 24 et 25) de touche étant situés sur les quatre côtés, respectivement, de chaque puits en entourant le fond de celui-ci, de sorte que des commutateurs choisis de chacun desdits puits peuvent être actionnés par un doigt qui appuie vers le bas pour actionner le commutateur du fond du puits et appuie vers l'avant, l'arrière, la gauche et la droite pour mettre en oeuvre sélectivement chacun des autres commutateurs: le deuxième, le troisième, le quatrième et le cinquième.

12. Le clavier selon la revendication 9 caractérisé en outre par: une touche (7) de changement de mode servant à choisir un mode de fonctionnement et mise en oeuvre par un pouce de manière à modifier le mode de fonctionnement du clavier d'une façon telle que les quatre commutateurs (22, 23, 24, 25 ou 72, 73, 74, 75) de touches qui sont groupés autour de chacun des deux petits doigts deviennent, dans un mode d'actionnement, des touches de commande de curseur correspondant aux touches de déplacement montant, descendant, vers la gauche et vers la droite, du curseur; et un doigt amène un déplacement du curseur à être effectué relativement plus rapidement et l'autre doigt amène la commande du curseur à être effectuée relativement plus lentement.

13. Le clavier selon la revendication 11 caractérisé en outre en ce que la configuration prédéterminée de commutateurs de touches à la position (10) de pouce comprend au moins un premier et un deuxième commutateurs de pouce (12/13 ou 14/15 ou 16/17) sur l'un des trois côtés verticaux de la cavité (10) recevant le pouce.

14. Le clavier selon la revendication 13 caractérisé en outre en ce que chacun des trois côtés verticaux de la cavité (10) recevant le pouce porte deux commutateurs (12/13; 14/15; 16/17) positionnés côte à côte de manière que le pouce y vienne en prise, et le fond de la cavité (10) recevant le pouce inclut un commutateur inférieur (11).
